# EUROPÄISCHE PATENTANMELDUNG

(11) **EP 1 234 646 A2**
(43) Veröffentlichungstag der Anmeldung: **28.08.2002**
(21) Anmeldenummer: 02002821.3
(22) Anmeldetag: 08.02.2002
(51) Int. Cl.: B27G 19/02, B23D 59/00

(54) **Schutzvorrichtung für eine Stand-Kreissäge**

(30) Priorität: 27.02.2001 DE 20103373 U
(71) Anmelder: Wilhelm Altendorf GmbH & Co. KG, D-32429 Minden (DE)
(72) Erfinder: Altendorf, Wilfried, 32429 Minden (DE)
(74) Vertreter: Eisenführ, Speiser & Partner

(57) **Zusammenfassung**

Erfindungsgemäß ist eine Schutzvorrichtung (10) für eine Stand-Kreissäge (6), insbesondere für eine Tisch-Kreissäge (6), mit einer Schutzhaube (12), die an einem an der Kreissäge-Maschine befestigten Arm (16) höhenverstellbar und abnehmbar befestigt ist und die mit einem Hohlraum, der an der Schutzhaubenunterseite eine Öffnung aufweist, ein Sägeblatt (2) mindestens teilweise umschließt sowie mindestens eine mit dem Hohlraum kommunizierende Absaugöffnung (38) für Sägespäne hat, die in eine Absaugleitung (40) führt, dadurch gekennzeichnet, dass der von dem Hohlraum durch die Absaugöffnung (38) in die Absaugleitung (40) gebildete Leitungsweg nur Richtungsänderungen >90° aufweist.

## Beschreibung

Die vorliegende Erfindung betrifft eine Schutzvorrichtung für eine Stand-Kreissäge , nach dem Oberbegriff von Anspruch 1 und Anspruch 17.

Stand-Kreissägemaschinen sind insbesondere in der holzverarbeitenden Industrie bekannt und weit verbreitet. Ihr schnell rotierendes Sägeblatt stellt für einen die Maschine bedienenden Arbeiter, der ein Werkstück in aller Regel von Hand zuzuführen hat, eine große Gefährdung dar. Zum Schutz des Arbeiters sind daher Schutzhauben-Vorrichtungen bekannt - und in verschiedenen Ländern durch verschiedene Sicherheitsstandards vorgeschrieben -, die mit einem Hohlraum, der an der Schutzhaubenunterseite eine Öffnung aufweist, ein Sägeblatt mindestens teilweise umschließen. Solche Schutzhauben verhindern, dass der Arbeiter versehentlich insbesondere von oben in das rotierende Sägeblatt greift. Aber auch höhenverstellbare Schutzhauben sind bekannt, die einen Schnittbereich des Sägeblattes erst freigeben, wenn ein Werkstück herangeführt wird. Außerdem sind abnehmbare und auswechselbare Hauben bekannt, die einerseits Ersatz und Reparatur ermöglichen und andererseits den Einsatz von Schutzhauben verschiedener Innenkontur, z.B. für Schrägschnitte mit schräg gestellten Sägeblättern. Weiterhin sind Absaugöffnungen, die aus dem Haubeninnenraum in eine Absaugleitung führen, zum Abführen von Sägespänen und Sägestaub bekannt.

Die bekannten Schutzhauben-Vorrichtungen sind aber allesamt bezüglich ihrer Zuverlässigkeit und Handhabung verbesserungswürdig. So neigen bekannte Vorrichtungen mit Absaugvorrichtungen dazu, sich mit Staub und Spänen zuzusetzen, was deren Funktion beeinträchtigt. Das Wechsel der Schutzhauben an bekannten Vorrichtungen mittels Schraubenbefestigungen ist umständlich, und bei bekannten höhenverstellbaren Schutzhauben, die über einen langen Arm an der Maschine befestigt sind, ist der Verstellmechanismus "klapperig" auch aufgrund des weit auskragenden Armes, und diese übermäßige Beweglichkeit wirkt zum einen unzuverlässig und birgt zum anderen die Gefahr der Kollision der Haube mit dem rotierenden Sägeblatt.

Demgegenüber liegt der Erfindung die Aufgabe zugrunde, eine Schutzhauben-Vorrichtung für eine Stand-Kreissäge zu schaffen, deren Funktionen bezüglich Zuverlässigkeit und Handhabung verbessert sind.

Diese Aufgabe wird erfindungsgemäß durch eine Schutzvorrichtung mit den Merkmalen des Anspruchs 1 und durch eine Schutzvorrichtung mit den Merkmalen des Anspruchs 17 gelöst. Bevorzugte Ausgestaltungen der Erfindung sind in den Unteransprüchen angegeben.

Erfindungsgemäß weist eine Schutzvorrichtung für eine Stand-Kreissäge - insbesondere für eine Tisch-Kreissäge, aber auch z.B. für eine Kreissäge-Maschine mit im wesentlichen vertikaler Werkstückzuführung zur Wandmontage - eine Schutzhaube mit einem Hohlraum mit einer Öffnung zum mindestens teilweisen Umschließen des Sägeblattes der Kreissäge-Maschine auf. Die Schutzhaube ist an einem Arm befestigt, der seinerseits an der Kreissäge-Maschine befestigt ist, und die Schutzhaube ist daran höhenverstellbar und insbesondere zum Auswechseln abnehmbar. Des weiteren kommuniziert eine Absaugöffnung für Sägespäne und Sägestaub mit dem Hohlraum und führt in eine Absaugleitung, durch die Staub und Späne abgeführt werden können. Erfindungsgemäß ist ein von dem Hohlraum durch die Absaugöffnung in die Absaugleitung gebildeter Leitungsweg so ausgebildet, dass er nur Richtungsänderungen mit stumpfen Winkel, also größer als 90° und bevorzugt großer als 120° aufweist. Er hat vorzugsweise Krümmungsradien von nicht kleiner als 20 cm und besonders bevorzugt nicht kleiner als 50 cm.

Diese möglichst kontinuierliche Leitungsbahn, die die abgesaugte, Späne und Staub führende Luft erfindungsgemäß nehmen kann, sorgt für geringe Verwirbelungen und vermeidet insbesondere bei bevorzugter glattwandiger, nicht zerklüfteter Wandungskontur der Leitungswege für äußerste Reduktion von Bereichen mit Strömungsschatten und sogenannten "Totwasser"-Gebieten. Dies vermeidet Ablagerungen und daraus folgend erforderliche Reinigung der Absaugvorrichtungen.

Um die Saugluft aerodynamisch möglichst günstig zu führen, kann in den Leitungsweg, insbesondere im Bereich der Absaugöffnung, mindestens ein Luftleitsteg integriert sein, der dort zusätzlich auch die Funktion einer Aussteifungsrippe erfüllen kann.

Um das Absaugen möglichst wirkungsvoll zu gewährleisten, umschließt der Hohlraum der Schutzhaube das Sägeblatt möglichst nah und bündig - allerdings natürlich noch mit einem gewissen Mindestabstand, um ein sicher kollisionsfreies Rotieren des Sägeblattes unter der Schutzhaube zu gewährleisten. Damit diese möglichst enge Umhüllung sowohl bei einer geraden Stellung des Sägeblattes als auch bei einer Schrägstellung für Schrägschnitte gewährleistet ist - aber auch um die Schutzhaube zur Reparatur auswechseln zu können -, ist die eingangs beschriebene Schutzhaube auswechselbar, und zwar nach einem weiteren Aspekt der Erfindung dazu an dem Arm formschlüssig befestigt und aus dem Formschluss in der Ebene des Sägeblattes horizontal herausführbar.

Diese Bewegungsrichtung entspricht der Werkstückzuführbewegung und ist daher für einen bedienenden Arbeiter logisch, verständlich und daher auch besonders sicher.

Vorzugsweise lässt sich die Schutzhaube aus dem Formschluss in Richtung des Bereiches der Kreissäge herausführen, aus der die Werkstücke zugeführt werden - wo folglich auch bei üblicher Bedienung der Kreissäge der bedienende Arbeiter steht.

Der Formschluss ist vorzugsweise durch ein Schwalbenschwanzprofil realisiert, aber auch z.B. Steckzapfen oder andere Hinterschnitt-Profile mit geeigneten Verriegelungen sind erfindungsgemäß.

Der Formschluss ist vorzugsweise durch einen ebenfalls formschlüssigen, lösbaren Sicherungsriegel gesichert, um nicht ein versehentliches Abnehmen der Haube - oder sogar ein z.B. aufgrund von Vibrationen selbsttätiges - zu riskieren. Der Sicherungsriegel kann durch eine z.B. federvorgespannte Sperrklinke oder durch eine Sicherungsschraube, die als Riegel in eine Nut eingreift, erfindungsgemäß realisiert sein.

Zur besonders einfachen Handhabung (übrigens nicht nur bei der Auswechselbarkeit, sondern auch zur Höhenverstellung) kann die Schutzhaube vorzugsweise in eine in Richtung der Werkstückzuführung der Kreissäge gerichteten Vorderkante einen integrierten Handgriff aufweisen. Der Sicherungsriegel ist zur einfachen Bedienung dann vorzugsweise auch dort im Bereich des Handgriffs angeordnet.

Diese erfindungsgemäßen Merkmale der zum Auswechseln lösbaren, formschlüssigen Verbindung können erfindungsgemäß mit den zuvor beschriebenen erfindungsgemäßen Merkmalen der krümmungsgünstigen Ausgestaltung des Saugleitungsweges kombiniert sein.

Erfindungsgemäß mit beiden Merkmalsgruppen einzeln oder gemeinsam kombinierbar ist außerdem eine Lagerung der höhenverstellbaren Schutzhaube in einer Linearführung an dem Arm, die vorzugsweise kugelgelagert ist. Zur Kompensation ihres Eigengewichts kann die Schutzhaube in der Linearführung mittels einer Feder aufwärts vorgespannt sein, wobei diese Vorspannung einstellbar und/oder durch eine Bremse, die die Bewegung der Schutzhaube in der Linearführung bremst, gebremst sein kann. Die Bremse ist vorzugsweise reibschlüssig mit möglicherweise einstellbarer Reibschlüssigkeit.

Vorzugsweise überdeckt die Schutzhaube zunächst den Schnittbereich des Sägeblattes - das z.B. bei einer Tisch-Kreissäge aus der Tischplatte emporragt - im wesentlichen vollständig. Um nun an einem herangeführten Werkstück einen Sägeschnitt anzubringen, weist die Schutzhaube vorzugsweise ein Führungsprofil auf, das mit dem zugeführten Werkstück zusammenwirkt, die Schutzhaube soweit anzuheben, dass das Werkstück darunter die Schnittkante des Sägeblattes erreicht und dort geschnitten wird. Um dieses Aufwärtsdrücken (also in im wesentlichen vertikaler Richtung) durch die im wesentlichen horizontale Zuführbewegung des Werkstückes vorteilhaft zu unterstützen, ist die Linearführung vorzugsweise aus der Vertikalen gekippt, und zwar in der Ebene des Sägeblattes vom Bereich der Werkstückzuführung weg. Dies bewirkt einen Bewegungsanteil der Schutzhaube zusätzlich zu der Aufwärtsrichtung auch in Richtung der Werkstückzuführung und erleichtert folglich diese Betätigung. Vorzugsweise ist das Führungsprofil als Rolle ausgebildet, die mit einer Drehachse parallel zur Sägeblattdrehachse die vordere Unterkante der unterseitigen Haubenöffnung bildet.

Die Höhenverstellung der Schutzhaube kann erfindungsgemäß auch motorisch betätigt sein. Der Motor weist dann vorzugsweise eine Steuerung auf mit einem Sensor, der den Bereich der Werkstückzuführung vor dem Sägeblatt überwacht. Dieser Sensor kann die Anwesenheit eines Gegenstandes, insbesondere eines Werkstücks, wahrnehmen und daraufhin der Steuerung ein Signal der entsprechenden Betätigung des Motors geben. Insbesondere, wenn vorzugsweise als Videokamera ausgestaltet, kann der Sensor auch ein Werkstück von z.B. einem Körperteil des bedienenden Arbeiters unterscheiden und bei Erkennung des letzteren zu dessen Sicherheit die Steuerung gerade dazu veranlassen, das motorische Anheben der Schutzhaube eben nicht zu betätigen.

Die vorliegende Erfindung wird im folgenden mit Bezug auf die beigefügten Zeichnungen beschrieben.
- Figur 1: zeigt eine Seitenansicht einer erfindungsgemäßen Schutzvorrichtung,

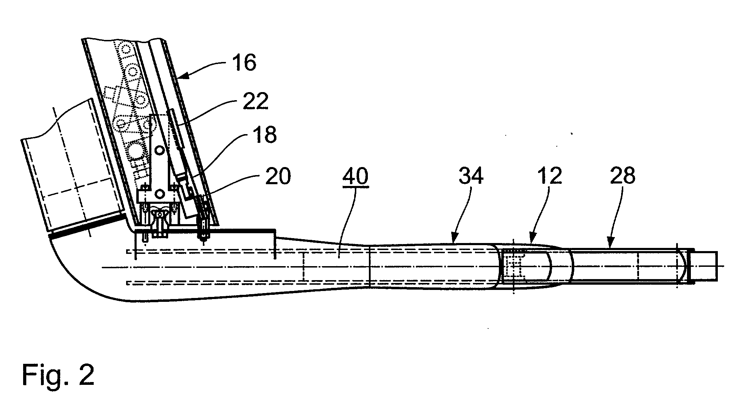

- Figur 2: zeigt eine Draufsicht auf die Schutzvorrichtung nach Figur 1,
- Figur 3: zeigt eine geschnittene Vorderansicht der Schutzvorrichtung nach Figur 1 und 2 entlang der Linie A-A, und
- Figur 4: zeigt eine entlang der Linie B-B geschnittene Einzelheit der Figur 1.

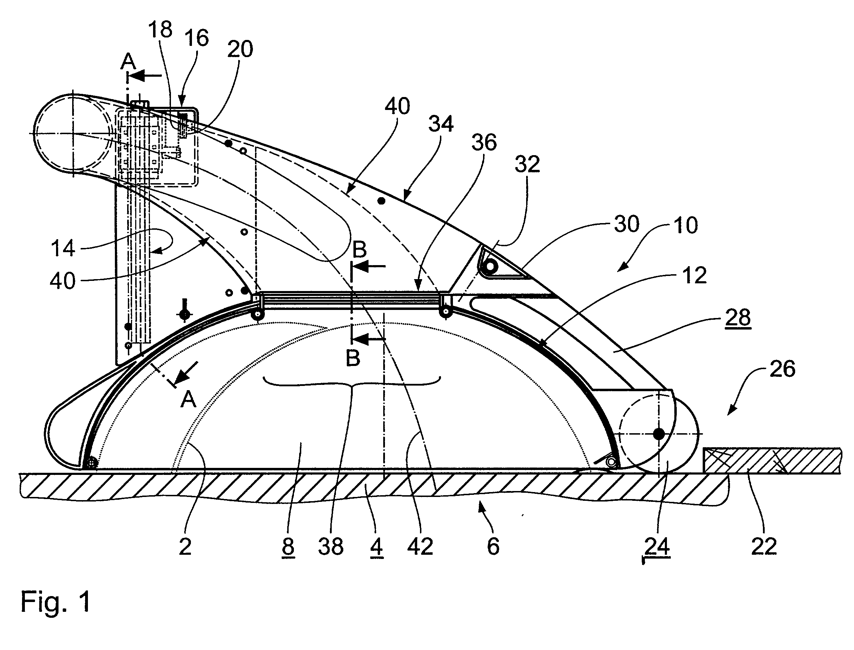

Figur 1 zeigt stilisiert ein Sägeblatt 2, das aus der Oberseite eines Tisches 4 einer Tisch-Kreissäge 6 herausragt. Über den kreissegmentförmigen Schnittbereich 8 des Sägeblattes 2 ist eine Schutzvorrichtung 10 mit einer Schutzhaube 12 abgesenkt. Dazu ist die Schutzhaube 12 über eine Linearführung 14 an einem im wesentlichen horizontalen Arm 16 höhenverstellbar gelagert. Zur Kompensation des Eigengewichts der Schutzhaube 12 und der mit ihr verbundenen Elemente sind diese über ein Seil 18 über eine Rolle 20 mittels einer Feder 22 aufwärts vorgespannt. Ein Werkstück 22, das auf dem Tisch 4 (in Figur 1 von rechts) an das Sägeblatt 2 herangeführt wird, wirkt dort mit einem als Rolle 24 ausgestalteten Führungsprofil zusammen, die in der Linearführung 14 gelagerte Haube 12 aufwärts zu drücken, damit das Werkstück 22 unter der dann aufwärts gedrückten Haube 12 zu dem Sägeblatt 2 gelangen kann. Um diesen Effekt zu erleichtern, kann die Linearführung 14 alternativ vom Bereich der Werkstückzuführung 26 weg aus der dargestellten Vertikalen (also in Figur 1 nach links) gekippt sein.

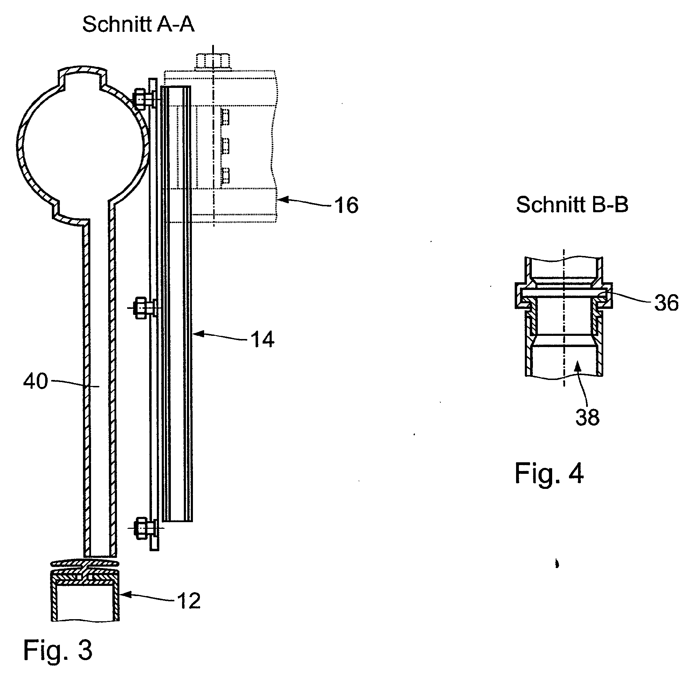

Um die Haube 12 auch von Hand betätigt anzuheben - aber auch um sie auszuwechseln (Beschreibung dazu sogleich) - weist die Haube 12 in einer in Richtung der Werkstückzuführung 26 gerichteten Vorderkante der Schutzhaube 12 einen integrierten Handgriff 28 auf. Oberhalb des Handgriffs 28 ist ein Sicherungsriegel 30 erkennbar - der auch alternativ als Sicherungsschraube um die als Wirklinie 32 dargestellte Achse ausgestaltet sein kann. Wird der Sicherungsriegel 30 betätigt, so zieht dieser einen Bolzen entlang der Achse 32 nach oben und gibt damit einen Freiheitsgrad einer formschlüssigen Verbindung zwischen der Haube 12 und einem oberseitig an die Haube 12 angrenzenden Trägerstutzen 34 frei. Dies ermöglicht, die Haube 12 (in der Figur 1 nach rechts) horizontal von dem Trägerstutzen 34 abzuziehen. Um nicht mit dem Sägeblatt 2 zu kollidieren, kann die Haube 12 dazu mittels der Linearführung 14 von dem Sägeblatt 2 abgehoben sein. Dieses Abziehen wird ermöglicht durch eine schwalbenschwanzförmige (also formschlüssige) Verbindungsschiene 36 im Scheitel der Haube 12 (siehe auch Figur 4).

Aus Figur 4 geht insbesondere auch hervor, dass das Schwalbenschwanzprofil um eine Absaugöffnung 38 im Scheitel der Schutzhaube 12 angeordnet ist. Die Absaugöffnung 38 mündet in eine Absaugleitung 40 in dem Trägerstutzen 34. In Figur 1 erkennbar ist der dort nach links geneigte kontinuierliche Leitungsweg (angedeutet durch die Mittellinie 42 mit Richtungsänderungen nicht kleiner als 120°, gemessen zwischen den Tangenten (nicht dargestellt)) am Anfang und am Ende der Linie 42).

## Patentansprüche

1. Schutzvorrichtung für eine Stand-Kreissäge, insbesondere für eine Tisch-Kreissäge, mit einer Schutzhaube, die an einem an der Kreissäge-Maschine befestigten Arm höhenverstellbar und abnehmbar befestigt ist und die mit einem Hohlraum, der an der Schutzhaubenunterseite eine Öffnung aufweist, ein Sägeblatt mindestens teilweise umschließt sowie mindestens eine mit dem Hohlraum kommunizierende Absaugöffnung für Sägespäne hat, die in eine Absaugleitung führt, **dadurch gekennzeichnet, dass** der von dem Hohlraum durch die Absaugöffnung in die Absaugleitung gebildete Leitungsweg nur Richtungsänderungen >90° aufweist.

2. Vorrichtung nach Anspruch 1,
**dadurch gekennzeichnet, dass** mindestens im Bereich der Absaugöffnung mindestens ein Luftleitsteg integriert ist.

3. Vorrichtung nach einem der vorhergehenden Ansprüche, **dadurch gekennzeichnet, dass** die Schutzhaube an dem Arm höhenverstellbar in einer Linearführung gelagert ist.

4. Vorrichtung nach Anspruch 3,
**dadurch gekennzeichnet, dass** die Schutzhaube zur Kompensation des Eigengewichtes in der Linearführung mittels einer Feder aufwärts vorgespannt ist.

5. Vorrichtung nach einem der Ansprüche 3 oder 4,
**gekennzeichnet durch** eine Bremse, die die Bewegung der Schutzhaube in der Linearführung bremst.

6. Vorrichtung nach Anspruch 5,
**dadurch gekennzeichnet, dass** die Bremse reibschlüssig und einstellbar ist.

7. Vorrichtung nach einem der Ansprüche 3 bis 6,
**dadurch gekennzeichnet, dass** die Schutzhaube im Bereich der Werkstückzuführung vor dem Sägeblatt ein Führungsprofil aufweist, das die Schutzhaube durch ein zugeführtes Werkstück aufwärts drückt, und dass die Linearführung in der Ebene des Sägeblattes vom Bereich der Werkstückzuführung weg aus der Vertikalen gekippt ist.

8. Vorrichtung nach Anspruch 7,
**dadurch gekennzeichnet, dass** das Führungsprofil von einer Rolle gebildet ist, die die vordere Unterkante der unterseitigen Haubenöffnung bildet.

9. Vorrichtung nach einem der vorhergehenden Ansprüche,
**gekennzeichnet durch** einen Motor, der die Höhenverstellung der Schutzhaube antreibt.

10. Vorrichtung nach Anspruch 9,
**gekennzeichnet durch** Steuerung des Motors mit einem Sensor, der den Bereich der Werkstückzuführung vor dem Sägeblatt überwacht und bei Anwesenheit eines Gegenstandes in dem Bereich ein Signal an die Steuerung abgibt.

11. Vorrichtung nach Anspruch 10,
**dadurch gekennzeichnet, dass** der Sensor eine Videokamera ist.

12. Vorrichtung nach einem der vorhergehenden Ansprüche,
**dadurch gekennzeichnet, dass** die Schutzhaube an dem Arm formschlüssig befestigt und aus dem Formschluss in der Ebene des Sägeblattes horizontal herausführbar ist.

13. Vorrichtung nach Anspruch 12,
**dadurch gekennzeichnet, dass** die Schutzhaube aus dem Formschluss in der Ebene des Sägeblattes horizontal in Richtung der Werkstückzuführung der Kreissäge herausführbar ist.

14. Vorrichtung nach einem der Ansprüche 12 oder 13,
**dadurch gekennzeichnet, dass** der Formschluss von einem Schwalbenschwanzprofil gebildet ist.

15. Vorrichtung nach einem der Ansprüche 12 bis 14,
**dadurch gekennzeichnet, dass** der Formschluss einen formschlüssigen, lösbaren Sicherungsriegel aufweist.

16. Vorrichtung nach einem der vorhergehenden Ansprüche,
**dadurch gekennzeichnet, dass** in einer in Richtung der Werkstückzuführung der Kreissäge gerichteten Vorderkante der Schutzhaube ein Handgriff integriert ist.

17. Schutzvorrichtung für eine Stand-Kreissäge, insbesondere für eine Tisch-Kreissäge, mit einer Schutzhaube, die an einem an der Kreissäge-Maschine befestigten Arm höhenverstellbar und abnehmbar befestigt ist und die mit einem Hohlraum, der an der Schutzhaubenunterseite eine Öffnung aufweist, ein Sägeblatt mindestens teilweise umschließt sowie mindestens eine mit dem Hohlraum kommunizierende Absaugöffnung für Sägespäne hat, die in eine Absaugleitung führt, **dadurch gekennzeichnet, dass** die Schutzhaube an dem Arm formschlüssig befestigt und aus dem Formschluss in der Ebene des Sägeblattes horizontal herausführbar ist.

18. Vorrichtung nach Anspruch 17,
**dadurch gekennzeichnet, dass** die Schutzhaube aus dem Formschluss in der Ebene des Sägeblattes horizontal in Richtung der Werkstückzuführung der Kreissäge herausführbar ist.

19. Vorrichtung nach einem der Ansprüche 17 oder 18,
**dadurch gekennzeichnet, dass** der Formschluss von einem Schwalbenschwanzprofil gebildet ist.

20. Vorrichtung nach einem der Ansprüche 17 bis 19,
**dadurch gekennzeichnet, dass** der Formschluss einen formschlüssigen, lösbaren Sicherungsriegel aufweist.

21. Vorrichtung nach einem der Ansprüche 17 bis 20,
**dadurch gekennzeichnet, dass** in einer in Richtung der Werkstückzuführung der Kreissäge gerichteten Vorderkante der Schutzhaube ein Handgriff integriert ist.

22. Vorrichtung nach einem der Ansprüche 17 bis 21,
**dadurch gekennzeichnet, dass** die Schutzhaube an dem Arm höhenverstellbar in einer Linearführung gelagert ist.

23. Vorrichtung nach Anspruch 22,
**dadurch gekennzeichnet, dass** die Schutzhaube zur Kompensation des Eigengewichtes in der Linearführung mittels einer Feder aufwärts vorgespannt ist.

24. Vorrichtung nach einem der Ansprüche 22 oder 23,
**gekennzeichnet durch** eine Bremse, die die Bewegung der Schutzhaube in der Linearführung bremst.

25. Vorrichtung nach Anspruch 24,
**dadurch gekennzeichnet, dass** die Bremse reibschlüssig und einstellbar ist.

26. Vorrichtung nach einem der Ansprüche 22 bis 25,
**dadurch gekennzeichnet, dass** die Schutzhaube im Bereich der Werkstückzuführung vor dem Sägeblatt ein Führungsprofil aufweist, das die Schutzhaube durch ein zugeführtes Werkstück aufwärts drückt, und dass die Linearführung in der Ebene des Sägeblattes vom Bereich der Werkstückzuführung weg aus der Vertikalen gekippt ist.

27. Vorrichtung nach Anspruch 26,
**dadurch gekennzeichnet, dass** das Führungsprofil von einer Rolle gebildet ist, die die vordere Unterkante der unterseitigen Haubenöffnung bildet.

28. Vorrichtung nach einem der Ansprüche 17 bis 27,
**gekennzeichnet durch** einen Motor, der die Höhenverstellung der Schutzhaube antreibt.

29. Vorrichtung nach Anspruch 28,
**gekennzeichnet durch** Steuerung des Motors mit einem Sensor, der den Bereich der Werkstückzuführung vor dem Sägeblatt überwacht und bei Anwesenheit eines Gegenstandes in dem Bereich ein Signal an die Steuerung abgibt.

30. Vorrichtung nach Anspruch 29,
**dadurch gekennzeichnet, dass** der Sensor eine Videokamera ist.
